(19) Europäisches Patentamt
European Patent Office
Office européen des brevets

(11) **EP 4 659 938 A1**

(12) **EUROPEAN PATENT APPLICATION**
published in accordance with Art. 153(4) EPC

(43) Date of publication:
**10.12.2025 Bulletin 2025/50**

(21) Application number: **24750142.2**

(22) Date of filing: **26.01.2024**

(51) International Patent Classification (IPC):
***B29C 65/08*** *(2006.01)* ***B26F 1/32*** *(2006.01)*

(52) Cooperative Patent Classification (CPC):
**B26F 1/32; B29C 65/08**

(86) International application number:
**PCT/JP2024/002353**

(87) International publication number:
**WO 2024/162193 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.02.2023 JP 2023014526**

(71) Applicant: **Toray Industries, Inc.
Tokyo 103-8666 (JP)**

(72) Inventors:
• **WATANABE, Tadashi
Iyo-gun, Ehime 791-3193 (JP)**
• **FUSE, Mitsuki
Nagoya-shi, Aichi 455-8502 (JP)**
• **HASEGAWA, Wataru
Nagoya-shi, Aichi 455-8502 (JP)**

(74) Representative: **Hoefer & Partner Patentanwälte
mbB
Pilgersheimer Straße 20
81543 München (DE)**

(54) **BASE MATERIAL FOR JOINING**

(57) Provided is a film-like base material for joining which comprises a thermoplastic resin, the base material for joining having a plurality of holes formed in the plane thereof. A non-hole portion has an even thickness, and further, in a projection surface perpendicular to the thickness direction of the base material for joining, non-hole edges lie at an even density. A base material for joining is provided, which has such a property that, when the base material for joining is subjected to ultrasonic welding, the uneven distribution of heated spots inside a joined surface is reduced and the welding speed is improved, thereby improving mechanical properties after the joining and also improving the productivity of an ultrasonic welding process.

## Figure 1

**Description**

TECHNICAL FIELD

The present invention relates to a base material for joining provided between adherends in advance when the adherends are bonded to each other.

BACKGROUND ART

Ultrasonic welding is an excellent method capable of joining adherends containing a thermoplastic resin to each other at high speed. In ultrasonic welding, ultrasonic vibration is applied to the joint surfaces to cause friction at high speed, thereby selectively heating and welding the joint surfaces. From the viewpoint of stabilizing the place where the friction is caused and increasing the heating rate, there has been widely devised a method in which a convex member is arranged in advance on the joint surface and the action of ultrasonic waves is concentrated on the convex member.

The stability of ultrasonic welding and the improvement in the processing speed generally contribute to joining of adherends containing a thermoplastic resin, and in particular, a remarkable effect is expected in the joining of fiber-reinforced resin materials. The fiber-reinforced resin material is a resin material containing fibers as a reinforcing material, but when welding the fiber-reinforced resin material, there is the problem that arrangement of fibers is disturbed in order from a melted portion, and mechanical properties are deteriorated. Therefore, in the welding of the fiber-reinforced resin material, it is extremely strongly required that the joint surface is evenly heated and the welding is completed in a short time.

Patent Document 1 discloses a welding method in which a mountain-shaped energy director is provided in advance on a surface of an adherend.

Patent Document 2 discloses an invention that is a net interposed between adherends, in which a cross section of a filament constituting the net has an elliptical shape elongated in a thickness direction of the net. In this invention, the convex portion disposed on the joint surface is prepared as the net independent of the adherend, and the net is interposed between the adherends, thereby eliminating the difficulty of forming the convex portion on the surface of the adherend.

Patent Document 3 discloses an ultrasonic welding member to be sandwiched between adherends, in which all voids contained in the ultrasonic welding member are formed to be opened to the outside, and at least a part of the ultrasonic welding member is a mesh member of a woven fabric or a knitted fabric. This invention provides an ultrasonic welding member in which the voids are less likely to remain after welding by having a form in which all the contained voids are opened to the outside.

Patent Document 4 discloses an ultrasonic welding member in which all the voids are formed so as to be opened to the outside as in Patent Document 3, and at least a part thereof is an aggregate of dot-shaped members.

PRIOR ART DOCUMENTS

PATENT DOCUMENTS

Patent Document 1: Japanese Patent No. 5973690
Patent Document 2: Japanese Patent No. 3536385
Patent Document 3: Japanese Patent No. 6517713
Patent Document 4: Japanese Patent No. 6820374

SUMMARY OF THE INVENTION

PROBLEMS TO BE SOLVED BY THE INVENTION

In the process of causing friction by ultrasonic vibration, oscillatory deformation in the direction perpendicular to the joint surface due to ultrasonic vibration is converted into deformation in the lateral direction by the Poisson effect on the joint surface, thereby causing friction. Therefore, by designing the form of the member disposed on the joint surface in consideration of the contribution to the Poisson effect, it is possible to further increase the stability and processing speed of ultrasonic welding. However, in the conventional technique, contrivance based on the Poisson effect has not been sufficiently made.

This type of mountain-shaped energy director in Patent Document 1 is widely used in ultrasonic welding, but from the viewpoint of the Poisson effect, since the contact area with the joint surface is small, the deformation converted in the lateral direction is small, and there is room for further improvement. In addition, there is the problem that it is not technically easy to provide such a very small convex portion on the adherend in advance, and the molding method is limited.

However, in Patent Document 2, since the section has a shape elongated in the thickness direction, conversion efficiency of longitudinal and lateral deformations due to the Poisson effect is low, movement that does not contribute to friction, such as buckling and rotation, is easily induced, and thus there is room for improvement in the form. In addition, there is no regulation on the condition to be satisfied by the arrangement of the filaments, and there is room for improvement and study based on the Poisson effect.

In Patent Document 3, however, while voids are opened to the outside, the thickness of the mesh of the woven fabric or the knitted fabric becomes uneven, the region where the ultrasonic vibration acts is limited to the mesh thread intersection of the thickest portion, and there is a limitation that the conversion efficiency to lateral deformation due to the Poisson effect is suppressed. The woven fabric or knitted fabric is a member in which onedimensional threads are woven or knitted to form a two-dimensional form, but since the fixation in the direction orthogonal to the threads is performed only by weaving or knitting of the threads, there is a concern that when ultrasonic vibration acts, the fixation is insufficient and a place where the ultrasonic vibration acts is not stable.

In the invention of Patent Document 4, as in Patent Document 3, by forming the dot-shaped member, all the voids are opened to the outside, but on the other hand, there is the concern that the dot-shaped member is independent from the surrounding members and the holding property of the position is low. In particular, when ultrasonic welding is performed, since a large load and vibration act on the joint surface, the position of the dot-shaped member fluctuates during application of vibration, and the place where ultrasonic vibration acts may not be stable. Further, the form of the dot-shaped member is not specifically defined, and there is room for improvement in the form based on the Poisson effect.

As disclosed in Patent Documents 1 to 4, conventionally, various attempts have been made to improve the quality and efficiency of ultrasonic welding by devising the configuration of the joint surface. However, as described above, a form based on the Poisson effect caused in ultrasonic welding has not been sufficiently studied and remains as a problem to be solved. An object of the present invention is to provide a base material for joining having an improved form based on the Poisson effect in order to reduce uneven distribution of heated spots in a joint surface and to improve a welding speed in ultrasonic welding.

SOLUTIONS TO THE PROBLEMS

The present invention is a film-like base material for joining containing a thermoplastic resin and having a plurality of hole portions formed in a plane of the base material for joining, in which a non-hole portion has an even thickness, and in a projection surface perpendicular to the thickness direction of the base material for joining, non-hole edges lie at an even density.

According to a preferable aspect of the present invention, an area ratio R of the non-hole portion to a total projected area of the projection surface perpendicular to the thickness direction of the base material for joining satisfies $20\% < R < 80\%$.

According to a preferable aspect of the present invention, the non-hole portion is subjected to a thinning process in the projection surface perpendicular to the thickness direction of the base material for joining, a distance to a non-hole edge closest to a thin line on each of both sides of the thin line is measured, a sum of the distances is calculated, and a characteristic length L (mm) determined by averaging the sum of the distances over the entire thin line satisfies $2 < L/t < 50$ with respect to a thickness t (mm) of the non-hole portion.

According to a preferable aspect of the present invention, the thermoplastic resin is at least one selected from a polyamide resin, a polyphenylene sulfide resin, and a polyaryletherketone resin.

EFFECTS OF THE INVENTION

By forming the hole portions in the base material for joining, lateral deformation due to the Poisson effect is induced at the non-hole edges, and the non-hole edges are arranged so as to have an even density, whereby the joint surface is uniformly and evenly heated. At this time, since the thickness of the non-hole portion is even, the action of the ultrasonic wave is not biased to a part of the non-hole portion, and the non-hole edges are evenly heated over the entire joint surface. Furthermore, as the heating proceeds over the entire joint surface, the time required for welding is reduced, and the welding speed is improved. In addition, since the hole portion is formed in the base material for joining, the region subjected to the action of the ultrasonic vibration is limited to the non-hole portion. Therefore, when receiving the ultrasonic vibration of the same output, the density of the ultrasonic energy transmitted per area is increased, and the ultrasonic welding speed is further improved. In addition, since the non-hole portions are arcwise-connected on the projection surface perpendicular to the thickness direction of the base material for joining, the non-hole portions are two-dimensionally constrained to each other, and the shape retention is high. As a result, the position of the base material does not change even at the time of ultrasonic welding, and the uneven distribution of the heated spots is suppressed.

BRIEF DESCRIPTION OF THE DRAWINGS

Fig. 1 is a perspective view of an example of a base material for joining of the present invention.
Fig. 2 is a perspective view of an example of a method for using the base material for joining of the present invention.
Figs. 3(a) and 3(b) are a top view and a sectional view, respectively, of hole portions, a non-hole portion, and non-hole edges of the base material for joining of the present invention.
Fig. 4 is an explanatory diagram illustrating a projection surface perpendicular to the thickness direction of the base material for joining defined in the present invention.
Fig. 5 includes top views showing other examples of the hole portions of the base material for joining of the present invention, where Fig. 5(a) shows hexagonal holes, and Fig. 5(b) shows rectangular holes.
Fig. 6 includes sectional views showing other examples of the hole portions of the base material for joining of the present invention, where Fig. 6(a) shows cone-shaped holes, Fig. 6(b) shows holes whose axes are not perpendicular to the base material for joining, and Fig. 6(c) shows holes whose depth is less than the thickness of the non-hole portion.
Fig. 7 is a top view illustrating a characteristic length of the base material for joining of the present invention.

EMBODIMENT OF THE INVENTION

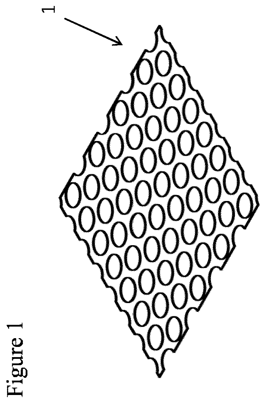

A base material for joining of the present invention is characterized in that the base material for joining is a film-like base material for joining containing a thermoplastic resin and having a plurality of hole portions formed in a plane of the base material for joining, in which a non-hole portion has an even thickness, and in a projection surface perpendicular to the thickness direction of the base material for joining, non-hole edges lie at an even density. Fig. 1 is a perspective view of an example of the base material for joining of the present invention.

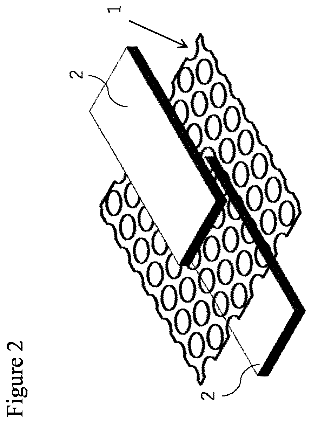

When adherends are bonded to each other by ultrasonic welding, as illustrated in Fig. 2, the base material for joining of the present invention is sandwiched between the adherends in advance to reduce uneven distribution of heated spots in a joint surface and increase a welding speed. The base material for joining sandwiched between the adherends is compressed between the adherends by ultrasonic vibration and is deformed in a direction parallel to the joint surface by the Poisson effect. Due to the deformation parallel to the joint surface, the base material for joining rubs against the joint surfaces to generate frictional heat, and the base material for joining and the adherend, and furthermore, the adherends, are welded to each other.

If hole portions are not provided in the base material and the base material is solid, while the edges of the vibrated portion with weak surrounding constraint are greatly deformed, the position of the vicinity of the center of the vibrated portion is not substantially changed, and frictional heat is not generated. By providing hole portions in the base material for joining, the constraint on the base material for joining is weakened at non-hole edges, and large deformation due to the Poisson effect is induced. Furthermore, since the non-hole edges are distributed at an even density, even and high-speed heating in the joint surface is realized.

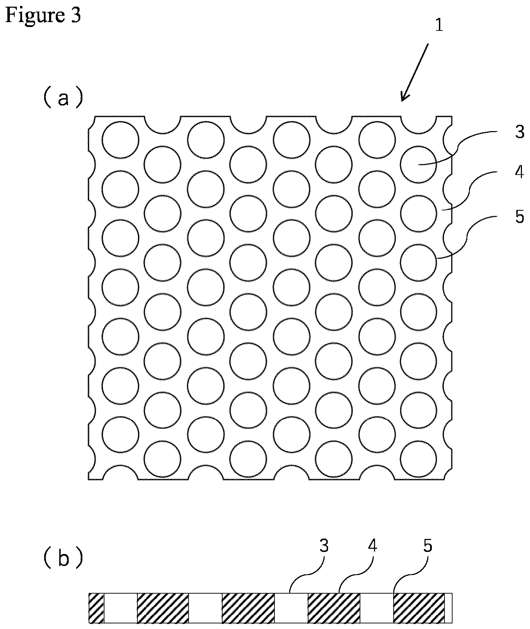

Fig. 3 illustrates the hole portions, a non-hole portion, and the non-hole edges in a part of the base material for joining of the present invention. The hole portion is defined as a three-dimensional region including all of a plurality of holes provided in the base material for joining of the present invention, and the non-hole portion is defined as a three-dimensional region that is not the hole portion. Therefore, when the hole portions and the non-hole portion are combined, the entire base material for joining is obtained. The non-hole edge is defined as a two-dimensional region where the non-hole portion faces the hole portion. In the example of Fig. 3, the hole portion refers to a three-dimensional region including all the cylindrical holes, the non-hole portion refers to a portion that is not the hole portion, and the non-hole edge refers to a two-dimensional region including all the side surfaces of the cylindrical holes.

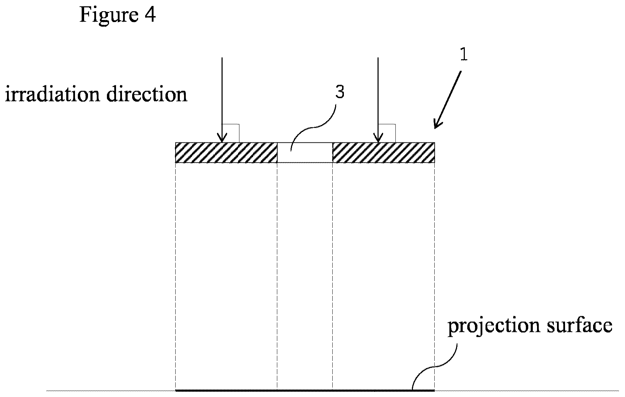

Here, the projection direction of the base material for joining is shown in Fig. 4. The base material for joining has a planar shape, and a projection surface obtained by irradiation in a direction perpendicular to the thickness direction is defined as the projection surface perpendicular to the thickness direction of the base material for joining.

A thickness t (mm) of the non-hole portion is defined by an average value of the thicknesses of the entire non-hole portion. The thickness of the non-hole portion being even means that the absolute value of the difference is less than 10% of t (mm) when the thicknesses of two arbitrary positions of the non-hole portion are compared. The smaller the difference is, the less the possibility of occurrence of uneven distribution of the heated spots is, and therefore the difference is more preferably less than 5%, still more preferably less than 2%.

As a specific method for measuring the thickness of the non-hole portion, there is a method of measuring the thickness of the non-hole portion with a micrometer. Five positions are arbitrarily selected in the non-hole portion, the thicknesses of the five positions are measured with a micrometer, and an average value is calculated to obtain the thickness of the non-hole portion. Whether the thickness of the non-hole portion is even is determined by comparing the thicknesses of two positions among the five positions of the non-hole portion and calculating the absolute value of the difference.

The density of the non-hole edge in the projection surface perpendicular to the thickness direction of the base material for joining is calculated in a square evaluation region in which the length of one side defined in the projection surface is E (mm). Note that E (mm) satisfies $1{,}000 < E/t$.

Further, the centroid of the evaluation region is set at an arbitrary point inside the base material for joining projected on the projection surface. When the projected length of the non-hole edge included in the evaluation region is B (mm) and the projected area of the base material for joining included in the evaluation region is A (mm$^2$), the density of the non-hole edge is defined as B/A (1/mm). Here, the projected length of the non-hole edge will be specifically described with reference to Fig. 3. The projection surface of a non-hole edge 5 in Fig. 3 is a circle, and the circumferential length of the circle is the projected length of the non-hole edge 5. For example, when the evaluation region includes 10 circles having a radius r (mm), the projected length of the non-hole edge 5 in the evaluation region is $2\pi r \times 10$ (mm). Next, the projected area of the base material for joining indicates the area occupied by a non-hole portion 4 when the evaluation region is projected. When the shape is clearly known, the projected area is determined by calculation. In the case of Fig. 3, when the evaluation region is a square having one side E (mm) and the hole portion is circles having a radius r, and if 10 circles are included in the evaluation region, $E^2 - \pi r^2 \times 10$, which is an area obtained by subtracting 10 circle areas from the area of the square, is the projected area. When the shape of the projected area of the base material for joining is unclear, the projected length of the non-hole edge 5 and the projected area of the non-hole portion 4 can be measured by performing image processing on the projection surface.

The phrase "the density of the non-hole edge is even" means that when evaluation regions are set at two arbitrary positions of the base material for joining, and the densities of the non-hole edges are calculated and compared, the absolute value of the difference is less than 10% of the density of the non-hole edge averaged over the entire base material for joining. The smaller the difference is, the more occurrence of uneven distribution of the heated spots is reduced, and therefore the difference is more preferably less than 5%, still more preferably less than 2%.

As a specific measurement method of the density of the non-hole edge, there is a method in which the densities of the non-hole edges at five arbitrary positions of the base material for joining are measured and an average value is calculated to obtain the density of the non-hole edge. For example, a square evaluation region having a side length of 100 mm is designated in the base material for joining having a thickness of 0.1 mm, and the projected length of the non-hole edge is measured. Next, the projected area of the base material for joining included in the evaluation region is measured, and the density of the non-hole edge is determined by dividing the projected length by the projected area. Whether the density of the non-hole edge is even is determined by comparing the densities of two positions among the five positions and calculating the absolute value of the difference.

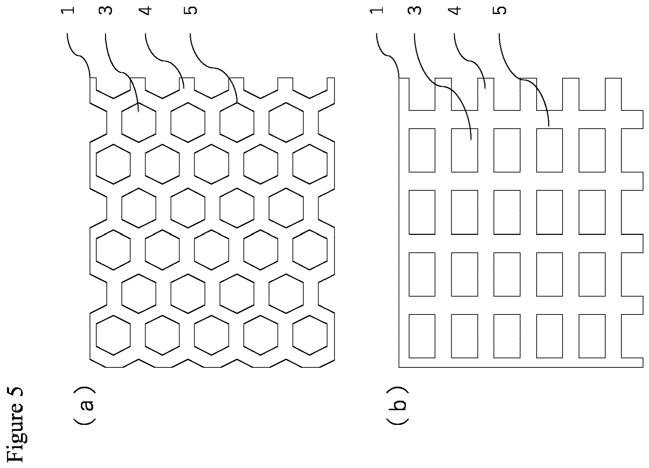

Since the hole portion is intended to weaken the constraint of the base material for joining and induce a Poisson deformation, the form thereof is not limited to a cylindrical shape. Fig. 5 includes top views showing other examples of the hole portion. Fig. 5(a) shows regular hexagonal holes, and Fig. 5(b) shows rectangular holes.

The x hole portion may have any shape as long as the non-hole edge is configured to have an even density on the projection surface perpendicular to the thickness direction of the base material for joining, and may be arranged at any positions. In addition, a plurality of holes having different shapes may be included, and the shape and arrangement may be regular or irregular. From the viewpoint of further reducing the uneven distribution of the heated spots in the joint surface, it is preferable that a plurality of holes whose projected shapes are rotationally symmetric and whose shapes are the same as each other be regularly arranged. The regular arrangement is also preferable from the viewpoint of productivity.

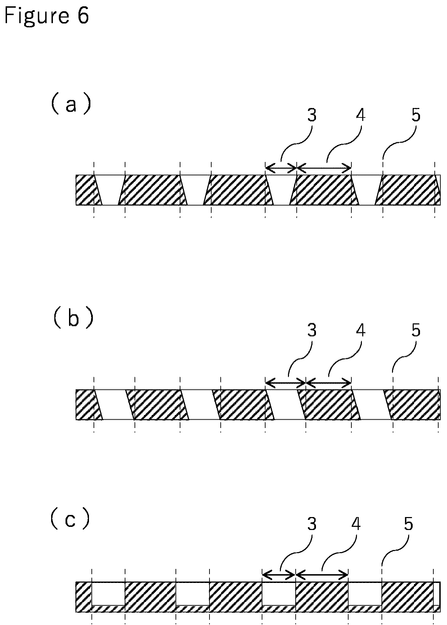

Fig. 6 shows other examples in which the shape of the hole portion in a sectional view of the base material for joining is not cylindrical. Fig. 6(a) shows a conical sectional shape, Fig. 6(b) shows a cylinder whose central axis is oblique, and Fig. 6(c) shows a recess that does not penetrate. The size of the hole may be different between positions in the thickness direction of the base material for joining, and when the central axis can be defined in the hole, the direction of the central axis may not be perpendicular to the base material for joining, and the hole may not penetrate. When there is a space where the base material for joining does not exist even partially in the thickness direction at an arbitrary position in the base material for joining, the portion is defined as the hole portion. This is because when the space is present even partially, the substantial thickness of the base material for joining is reduced, the Poisson deformation due to ultrasonic vibration is avoided, and that part serves as the hole portion.

Since the shapes of the adherends do not strictly coincide with each other depending on the dimensional tolerance, when ultrasonic vibration is applied, air always exists in the joint portion regardless of the presence or absence of the holes in the base material for joining, and the air is caught in the molten thermoplastic resin to form air bubbles. Therefore, in order to form a strong joint portion without voids, it is extremely effective to cause bleed out of the thermoplastic resin containing air bubbles to the outside of the joint surface at the time of welding. By using the base material for joining of the present invention, the joint surface can be evenly and quickly heated, so that the thermoplastic resin containing air bubbles can be quickly bled out on the entire joint surface, and the base material for joining of the present invention can be advantageously used also from the viewpoint of forming a strong joint portion without voids.

An area ratio R of the non-hole portion to the total projected area of the projection surface perpendicular to the thickness direction of the base material for joining preferably satisfies 20% < R < 80%. This is because the density of the non-hole edge, which is the boundary between the non-hole portion and the hole portion, is the highest when the ratio between the non-hole portion and the hole portion is around 50%. In addition, when the area ratio R is small, the pressure applied to the base material for joining when ultrasonic vibration of the same output is applied increases, and larger energy can be transmitted, so that the heating rate can be improved.

However, on the other hand, when the area ratio R is too small, the ratio at which the base material for joining covers the joint surface decreases, and the uneven distribution of the heated spots in the joint surface increases. As described above, the area ratio R has a trade-off relationship with respect to the performance of the base material for joining, and thus the area ratio R is preferably around 50% from the viewpoint of optimizing the trade-off relationship. The range of R is more preferably 30% < R < 70%, still more preferably 40% < R < 60%, because the density of the non-hole edge increases as the range of R is closer to 50%.

When the non-hole portion is subjected to a thinning process in the projection surface perpendicular to the thickness direction of the base material for joining, a distance to a non-hole edge closest to a thin line on each of both sides of the thin line is measured, a sum of the distances is calculated, and the average of the sum of the distances on both sides over the entire thin line is defined as a characteristic length L (mm), the non-hole portion preferably satisfies 2 < L/t < 50.

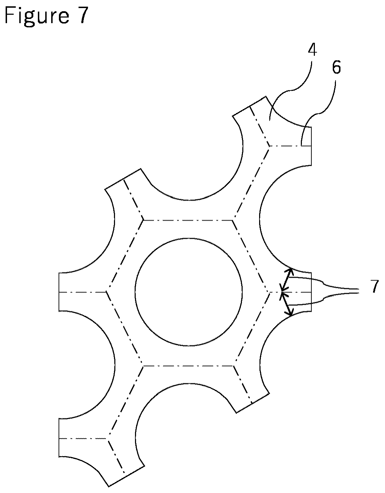

An example of the characteristic length L (mm) is schematically illustrated in Fig. 7. This is because heating due to ultrasonic vibration is significantly generated in the non-hole edge, and thus, by reducing the size of the non-hole portion between the non-hole edges, it is possible to reduce the uneven distribution of the heated spots in the joint surface, which is preferable. In addition, it is preferable to melt the entire base material for joining in order to weld the entire joint surface. By reducing the size of the non-hole portion between the non-hole edges, the part of the non-hole portion away from the non-hole edges where heating significantly occurs can be reduced, and the welding speed can be further increased.

On the other hand, when the characteristic length is too small, the magnitude of deformation parallel to the joint surface induced by the Poisson effect decreases. This can be understood from the expression of a deformation amount ΔL in the width direction due to the Poisson effect below when considering that a plate material having a thickness t (mm) and a width L (mm) is compressed by Δt in the thickness direction for the sake of simplicity.

[Mathematical Formula 1]

$$\Delta L = -\nu \frac{L}{t} \Delta t$$

Here, ν is the Poisson's ratio.

Since the width L and ΔL are in a proportional relationship, ΔL decreases when L is small, and the occurrence of friction is reduced. Therefore, L/t is preferably equal to or more than a certain value. In particular, when the aspect ratio L/t is one or less, buckling or slippage may occur in addition to the effects of the above formula, and the occurrence of friction due to the Poisson effect may be extremely weakened. From this viewpoint, L/t is preferably larger than two. The ratio L/t is preferably smaller within the above range because both the effect of reducing the uneven distribution of the heated spots and the effect of increasing the heating rate are enhanced. Therefore, 2 < L/t < 30 is more preferable, and 2 < L/t < 10 is still more preferable.

Here, the thinning process is an operation of deriving a line characterizing the form of the non-hole portion having a finite width between the hole portions and is defined by the following procedure.

(1) At a point P on any non-hole edge, a half line K perpendicular to the non-hole edge and extending in the non-hole portion direction is determined.
(2) For every point Q on the non-hole edge except for the point described in step (1), a half line L perpendicular to the non-hole edge and extending in the non-hole portion direction is determined, and an intersection point R of the half line K and the half line L is determined. When the half line K and the half line L exist on the same straight line, the intersection point R is the midpoint between the point P and the point Q.
(3) Among the points Q where the length of the line segment PR is equal to the length of the line segment QR, a point Q where the length of the line segment PR and the length of the line segment QR equal to the line segment PR are the shortest is selected. At this time, there may be a plurality of points Q.
(4) The point P is set on all the non-hole edges, the corresponding point Q is determined by steps (1) to (3), and a set of the point P and the point Q satisfying steps (1) to (3) is determined for the entire non-hole edges.
(5) A thin line to be determined is obtained as a set of lines constituted by the intersection points R determined by the set of the point P and the point Q obtained in step (4).

Any one of the conditions that the area ratio R and the characteristic length L (mm) of the non-hole portion preferably satisfy has an effect of enhancing the effect of the base material for joining, but when both are satisfied, a remarkable effect is exhibited, which is more preferable.

As the thermoplastic resin contained in the base material for joining, at least one selected from thermoplastic polyimide-based resins including a polyamide resin, a polyester resin, a polyphenylene sulfide resin, a polyacetal resin, a polyphenylene oxide resin, a polycarbonate resin, a polylactic acid resin, a polypropylene resin, a polyimide resin (PI resin), and a polyamideimide resin (PAI resin), polyaryletherketone-based resins including a polyetheretherketone resin (PEEK resin) and a polyetherketoneketone resin (PEKK resin), aromatic polyethersulfone-based resins including a polysulfone resin (PSU resin), a polyethersulfone resin (PES resin), and a polyphenylenesulfone resin (PPSU resin), and modified resins thereof can be used. From the viewpoint of achieving both mechanical properties and heat resistance of the joint portion, at least one selected from a polyamide resin, a polyphenylene sulfide resin, and a polyaryletherketone resin can be preferably used.

In a composite member of the present invention, the thickness t (mm) of the base material for joining is preferably 2 $\mu$m or more and less than 10,000 $\mu$m. When the thickness of the base material for joining is small, the base material for joining may not be able to absorb a shape difference of adherends (what is called dimensional error between members), a region in which ultrasonic vibration is not transmitted is formed, and the effect of the base material for joining is reduced. When the thickness of the base material for joining is large, air bubbles are likely to be contained in the joint portion after welding, which is a cause of lowering the strength of the joint portion. From the viewpoint of sufficiently exhibiting the effect of the base material for joining and enhancing the joining strength, the thickness of the base material for joining can be more preferably 10 $\mu$m or more and less than 1,000 $\mu$m, still more preferably 50 $\mu$m or more and less than 500 $\mu$m, for example.

In order to control the strength and thickness of the joint portion after welding, a filler may be included in the non-hole portion of the base material for joining. Examples of the filler include fibrous fillers such as glass fibers, glass milled fibers, carbon fibers, potassium titanate whiskers, zinc oxide whiskers, aluminum borate whiskers, aramid fibers, alumina fibers, silicon carbide fibers, ceramic fibers, asbestos fibers, gypsum fibers, and metal fibers; and nonfibrous fillers such as silicate salts including wollastonite, zeolite, sericite, kaolin, mica, clay, pyrophyllite, bentonite, asbestos, talc, and alumina silicate, metal compounds including alumina, silicon oxide, magnesium oxide, zirconium oxide, titanium oxide, and iron oxide, carbonate salts including calcium carbonate, magnesium carbonate, and dolomite, sulfate salts including calcium sulfate and barium sulfate, hydroxides including magnesium hydroxide, calcium hydroxide, and aluminum hydroxide, glass beads, ceramic beads, boron nitride, and silicon carbide. These may be hollow, and it is also possible to use two or more kinds of these fillers in combination. In addition, it is preferable to preliminarily treat these fibrous or nonfibrous fillers with a coupling agent such as an isocyanate-based compound, an organic silane-based compound, an organic titanate-based compound, an organic borane-based compound, and an epoxy compound and use them from the viewpoint of obtaining better mechanical properties.

In order to improve the strength, dimensional stability, and the like, when such a filler is used, the blending amount thereof is not particularly limited, but it is preferable to blend 50 to 400 parts by weight with respect to 100 parts by weight of the thermoplastic resin.

In order to enhance the mechanical properties of the base material for joining and enhance the joining strength, a fiber base material may be contained in the base material for joining. As a form of the fiber base material, a form such as a woven fabric, a knitted fabric, and a nonwoven fabric is preferable. Since this type of fiber material has high shapability, there is the advantage that it is difficult to form wrinkles when the fiber material is caused to lie along the shape, and adaptability to the clearance between the adherends is high. The type of the fibers of the fiber base material is not particularly limited, and carbon fibers, glass fibers, aramid fibers, and the like can be used, and the hybrid configuration in which these fibers are combined can also be used.

The base material for joining of the present invention can be suitably used in ultrasonic welding of arbitrary adherends but is more preferable in ultrasonic welding of adherends in which a thermoplastic resin exists at joint surfaces from the viewpoint that the members melt together to form a good joint surface by welding. In the ultrasonic welding of the adherends in which a thermoplastic resin containing fiber reinforcement exists at the joint surfaces, the effect exerted by the base material for joining of the present invention can significantly increase the mechanical properties of the joined portion. The type of reinforcing fibers is not particularly limited, and carbon fibers, glass fibers, aramid fibers, and the like can be used, and the base material for joining of the present invention can sufficiently exhibit the effect even in the hybrid configuration in which these fibers are combined. When the thermoplastic resin or the thermoplastic resin containing reinforcing fibers existing at the joint surface is the same kind as in the base material for joining, the welded portion is integrated after welding, which is more preferable. Further, in the ultrasonic welding, since the joint surface is selectively heated, even when a thermoplastic resin or a thermoplastic resin containing fiber reinforcement exists at the joint surface, it can also be suitably used in a composite member made of another type of material such as metal, wood, and thermosetting fiber-reinforced resins except for the joint surface.

EXAMPLES

Hereinafter, the present invention will be described further in detail by way of examples, but the present invention is not limited to these examples described below. In addition, since the numerical values described below are individually rounded after the calculation, the numerical values include a rounding error.

First, in order to confirm the effect of the base material for joining of the present invention, the base material for joining was provided between adherends in advance, ultrasonic vibration was applied to attempt welding, and success or failure of welding was judged. As the adherends, 2 PEEK resin plates having a square shape with a side length of 90 mm and containing carbon fibers as reinforcing fibers were used. The laminated constitution of the adherends was [0f/0/45/90/-45/-45/90/45/0]. The letter "f" in [] indicates a plain weave fabric. The ultrasonic vibration was caused to act using an ultrasonic welding machine having an output of 3,000 W, the ultrasonic welding machine including a horn having a diameter of 28 mm and a band-shaped flat portion having a width of 15 mm at the center, the ultrasonic welding machine being capable of performing horizontal scanning with the horn in a direction orthogonal to the band-shaped flat portion.

(Example 1)

A plurality of holes having a diameter of 2 mm were made in a PEEK film having a thickness of 0.1 mm to provide a base material for joining. At this time, the center-to-center distance of the holes was set to 4 mm, and the holes were arranged in a minutely packed manner. That is, 6 holes are arranged around a certain hole at positions with a center-to-center distance of 4 mm at intervals of 60°. At this time, the area ratio R was 60%, the characteristic length L was 2.53 mm, $L/t = 25.3$, and the density of the non-hole edge was 0.93 (1/mm). The absolute value of the difference in thickness for confirming whether the thickness of the non-hole portion was even was 8% of the thickness. The absolute value of the difference in density for confirming whether the density of the non-hole edge was even was 9% of the density.

Adherends were lapped at 45 mm so that the 0f layers faced each other and the fibers of the 0f layers were directed in the same direction, and the base material for joining was provided to the lapped portion. Ultrasonic vibration was applied to a region having a length of 60 mm at the central portion of the lapped region in the lapped direction while scanning with the horn at 40 mm/sec was performed.

As a result of applying the ultrasonic vibration, the adherends were welded to each other.

(Comparative Example 1)

A base material for joining and adherends were prepared under the same conditions as in Example 1 except that a solid film was used without making holes in the PEEK film, and ultrasonic vibration was applied.

As a result of applying the ultrasonic vibration, the adherends were not welded to each other, and the joint portion was easily broken.

(Comparative Example 2)

A base material for joining and adherends were prepared under the same conditions as in the example except that a plain weave mesh having a mesh size of 0.74 mm using a PEEK thread having a thread diameter of 0.3 mm was used as the base material for joining, and ultrasonic vibration was applied.

As a result of applying the ultrasonic vibration, the adherends were not welded to each other, and the joint portion was easily broken.

The conditions and results of Example 1 and Comparative Examples 1 and 2 are listed in Table 1.

(Example 2)

Ultrasonic vibration was applied to a base material for joining and adherends under the same conditions as in Example 1 except that the scanning speed of the horn was set to 25 mm/sec.

As a result of applying the ultrasonic vibration, the adherends were welded to each other.

(Example 3)

A base material for joining and adherends were prepared under the same conditions as in Example 2 except that the diameter of the holes was set to 1 mm and the center-to-center distance of the holes was set to 3 mm, and ultrasonic vibration was applied. At this time, the area ratio R was 77%, the characteristic length L was 2.32 mm, L/t = 23.2, and the absolute value of the thickness difference for confirming whether the thickness of the non-hole portion was even was 8% of the thickness. The absolute value of the difference in density for confirming whether the density of the non-hole edge was even was 9% of the density.

As a result of applying the ultrasonic vibration, the adherends were welded to each other.

(Example 4)

A base material for joining and adherends were prepared under the same conditions as in Example 2 except that the diameter of the holes was set to 4 mm and the center-to-center distance of the holes was set to 6 mm, and ultrasonic vibration was applied. At this time, the area ratio R was 42%, the characteristic length L was 2.96 mm, L/t = 29.6, and the absolute value of the thickness difference for confirming whether the thickness of the non-hole portion was even was 8% of the thickness. The absolute value of the difference in density for confirming whether the density of the non-hole edge was even was 8% of the density.

As a result of applying the ultrasonic vibration, the adherends were welded to each other.

(Comparative Example 3)

A base material for joining and adherends were prepared under the same conditions as in Example 2 except that a solid film was used without making holes in the PEEK film, and ultrasonic vibration was applied.

As a result of applying the ultrasonic vibration, the adherends were not welded to each other, and the joint portion was easily broken.

The conditions and results of Examples 2 to 4 and Comparative Example 3 are listed in Table 2.

(Example 5)

Ultrasonic vibration was applied to a base material for joining and adherends under the same conditions as in Example 1 except that the scanning speed of the horn was set to 30 mm/sec and the lap length of the adherends was set to 12.5 mm.

As a result of applying the ultrasonic vibration, the adherends were welded to each other.

(Example 6)

A base material for joining and adherends were prepared under the same conditions as in Example 5 except that the shape of the holes was changed to a regular hexagon, the orientation of the regular hexagon was set to a direction in which sides of a plurality of regular hexagonal holes faced each other, the length of one side of the regular hexagon was set to 0.5 mm, and the center-to-center distance of the holes was set to 1.22 mm, and ultrasonic vibration was applied. At this time, the area ratio R was 49%, the characteristic length L was 0.40 mm, L/t = 4.0, and the absolute value of the thickness difference for confirming whether the thickness of the non-hole portion was even was 8% of the thickness. The absolute value of the difference in density for confirming whether the density of the non-hole edge was even was 9% of the density.

As a result of applying the ultrasonic vibration, the adherends were welded to each other.

(Comparative Example 4)

A base material for joining and adherends were prepared under the same conditions as in Example 5 except that a solid film was used without making holes in the PEEK film, and ultrasonic vibration was applied.

As a result of applying the ultrasonic vibration, the adherends were not welded to each other, and the joint portion was easily broken.

The conditions and results of Examples 5 and 6 and Comparative Example 4 are listed in Table 3.

Next, in order to clarify preferable ranges of the area ratio R and the characteristic length L of the non-hole portion of the base material for joining of the present invention in detail, a base material for joining sandwiched between polyimide films on the upper and lower sides was provided in advance between adherends, ultrasonic vibration was applied, and then the polyimide films were removed to determine the molten area. As the adherends to be released by the polyimide films, 2 epoxy resin plates having a square shape with a side length of 25 mm and containing carbon fibers as reinforcing fibers were used. The laminated constitution of the adherends was [0f/0/45/90/-45/-45/90/45/0]. The adherends were lapped over 12.5 mm so that the 0f layers faced each other and the fibers of the 0f layers were directed in the same direction, the base material for joining and the polyimide films were provided in the lapped region, and the horn was not scanned in the horizontal direction and an ultrasonic wave was applied using the same apparatus as described above.

(Example 7)

A plurality of regular hexagonal holes each having a side length of 0.5 mm were made in a PEEK film having a thickness of 0.1 mm to provide a base material for joining. At this time, the holes were arranged so that the center-to-center distance of the holes was 1.22 mm, the holes were minutely packed, and the sides of the regular hexagons oppose each other. That is, 6 holes were arranged around a certain hole at positions with a center-to-center distance of 1.22 mm at intervals of 60°, and the sides of the regular hexagon at the center and the sides of the regular hexagons at the periphery were parallel. At this time, the area ratio R was 49%, the characteristic length L was 0.40 mm, L/t = 4.0, and the absolute value of the thickness difference for confirming whether the thickness of the non-hole portion was even was 8% of the thickness. The absolute value of the difference in density for confirming whether the density of the non-hole edge was even was 9% of the density.

As a result of applying ultrasonic vibration to the base material for joining through the polyimide film and the adherend for 150 msec, a region where the base material for joining was melted accounted for 97% on a projection surface perpendicular to the thickness direction of the base material for joining. Hereinafter, the ratio occupied by the region where the base material for joining was melted on the projection surface perpendicular to the thickness direction of the base material for joining is referred to as a melting percentage.

(Example 8)

Ultrasonic vibration was applied to a base material for joining and adherends under the same conditions as in Example 7 except that the side length of the regular hexagon was set to 2 mm and the center-to-center distance of the holes was set to 3.96 mm. At this time, the area ratio R was 24%, the characteristic length L was 0.53 mm, L/t = 5.3, and the absolute value of the thickness difference for confirming whether the thickness of the non-hole portion was even was 8% of the thickness. The absolute value of the difference in density for confirming whether the density of the non-hole edge was even was 9% of the density. As a result, the melting percentage was 66%.

(Example 9)

Ultrasonic vibration was applied to a base material for joining and adherends under the same conditions as in Example 7 except that the side length of the regular hexagon was set to 0.68 mm and the center-to-center distance of the holes was set to 1.67 mm. At this time, the area ratio R was 51%, the characteristic length L was 0.58 mm, L/t = 5.8, and the absolute value of the thickness difference for confirming whether the thickness of the non-hole portion was even was 8% of the thickness. The absolute value of the difference in density for confirming whether the density of the non-hole edge was even was 9% of the density. As a result, the melting percentage was 66%.

(Example 10)

Ultrasonic vibration was applied to a base material for joining and adherends under the same conditions as in Example 7 except that the center-to-center distance of the holes was set to 1.87 mm. At this time, the area ratio R was 78%, the characteristic length L was 1.28 mm, L/t = 12.8, and the absolute value of the thickness difference for confirming whether the thickness of the non-hole portion was even was 8% of the thickness. The absolute value of the difference in density for confirming whether the density of the non-hole edge was even was 9% of the density. As a result, the melting percentage was 53%.

(Example 11)

Ultrasonic vibration was applied to a base material for joining and adherends under the same conditions as in Example 7 except that the side length of the regular hexagon was set to 1.38 mm and the center-to-center distance of the holes was set to 3.38 mm. At this time, the area ratio R was 50%, the characteristic length L was 1.15 mm, L/t = 11.5, and the absolute value of the thickness difference for confirming whether the thickness of the non-hole portion was even was 8% of the thickness. The absolute value of the difference in density for confirming whether the density of the non-hole edge was even was 9% of the density. As a result, the melting percentage was 72%.

(Example 12)

Ultrasonic vibration was applied to a base material for joining and adherends under the same conditions as in Example 7 except that the side length of the regular hexagon was set to 4 mm and the center-to-center distance of the holes was set to 7.93 mm. At this time, the area ratio R was 24%, the characteristic length L was 1.07 mm, L/t = 10.7, and the absolute value of the thickness difference for confirming whether the thickness of the non-hole portion was even was 8% of the thickness. The absolute value of the difference in density for confirming whether the density of the non-hole edge was even was 9% of the density. As a result, the melting percentage was 55%.

(Example 13)

Ultrasonic vibration was applied to a base material for joining and adherends under the same conditions as in Example 7 except that the center-to-center distance of the holes was set to 2.87 mm. At this time, the area ratio R was 91%, the characteristic length L was 2.74 mm, L/t = 27.4, and the absolute value of the thickness difference for confirming whether the thickness of the non-hole portion was even was 8% of the thickness. The absolute value of the difference in density for confirming whether the density of the non-hole edge was even was 9% of the density. As a result, the melting percentage was 36%.

The conditions and results of Examples 7 to 13 are listed in Table 4.

(Example 14)

Ultrasonic vibration was applied to a base material for joining and adherends under the same conditions as in Example 7 except that the side length of the regular hexagon was set to 2.8 mm and the center-to-center distance of the holes was set to 6.85 mm. At this time, the area ratio R was 50%, the characteristic length L was 2.31 mm, L/t = 23.1, and the absolute value of the thickness difference for confirming whether the thickness of the non-hole portion was even was 8% of the thickness. The absolute value of the difference in density for confirming whether the density of the non-hole edge was even was 9% of the density. As a result, the melting percentage was 48%.

(Example 15)

Ultrasonic vibration was applied to a base material for joining and adherends under the same conditions as in Example 7 except that the center-to-center distance of the holes was set to 4.87 mm. At this time, the area ratio R was 97%, the characteristic length L was 5.74 mm, L/t = 57.4, and the absolute value of the thickness difference for confirming whether the thickness of the non-hole portion was even was 8% of the thickness. The absolute value of the difference in density for confirming whether the density of the non-hole edge was even was 9% of the density. As a result, the melting percentage was 27%.

(Example 16)

Ultrasonic vibration was applied to a base material for joining and adherends under the same conditions as in Example 7 except that the side length of the regular hexagon was set to 2 mm and the center-to-center distance of the holes was set to 7.46 mm. At this time, the area ratio R was 78%, the characteristic length L was 5.13 mm, L/t = 51.3, and the absolute value of the thickness difference for confirming whether the thickness of the non-hole portion was even was 8% of the thickness. The absolute value of the difference in density for confirming whether the density of the non-hole edge was even was 9% of the density. As a result, the melting percentage was 44%.

(Example 17)

Ultrasonic vibration was applied to a base material for joining and adherends under the same conditions as in Example 7 except that the side length of the regular hexagon was set to 2 mm and the center-to-center distance of the holes was set to 11.46 mm. At this time, the area ratio R was 91%, the characteristic length L was 10.95 mm, L/t = 109.5, and the absolute value of the thickness difference for confirming whether the thickness of the non-hole portion was even was 8% of the thickness. The absolute value of the difference in density for confirming whether the density of the non-hole edge was even was 9% of the density. As a result, the melting percentage was 26%.

(Comparative Example 5)

Ultrasonic vibration was applied to a base material for joining and adherends under the same conditions as in Example 7 except that a solid film was used without making holes in the PEEK film. As a result, the melting percentage was 20%.

The conditions and results of Examples 14 to 17 and Comparative Example 5 are listed in Table 5.

(Example 18)

Ultrasonic vibration was applied to a base material for joining and adherends under the same conditions as in Example 7 except that the thickness of the PEEK film was set to 0.25 mm, the side length of the regular hexagon was set to 1.38 mm, and the center-to-center distance of the holes was set to 3.38 mm. At this time, the area ratio R was 50%, the characteristic length L was 1.16 mm, L/t = 4.6, and the absolute value of the thickness difference for confirming whether the thickness of the non-hole portion was even was 8% of the thickness. The absolute value of the difference in density for confirming whether the density of the non-hole edge was even was 9% of the density. As a result, the melting percentage was 30%.

(Example 19)

Ultrasonic vibration was applied to a base material for joining and adherends under the same conditions as in Example 18 except that the side length of the regular hexagon was set to 2 mm and the center-to-center distance of the holes was set to 4.46 mm. At this time, the area ratio R was 40%, the characteristic length L was 1.12 mm, L/t = 4.5, and the absolute value of the thickness difference for confirming whether the thickness of the non-hole portion was even was 8% of the thickness. The absolute value of the difference in density for confirming whether the density of the non-hole edge was even was 9% of the density. As a result, the melting percentage was 29%.

(Example 20)

Ultrasonic vibration was applied to a base material for joining and adherends under the same conditions as in Example 18 except that the side length of the regular hexagon was set to 2 mm and the center-to-center distance of the holes was set to 7.46 mm. At this time, the area ratio R was 78%, the characteristic length L was 5.13 mm, L/t = 20.5, and the absolute value of the thickness difference for confirming whether the thickness of the non-hole portion was even was 8% of the thickness. The absolute value of the difference in density for confirming whether the density of the non-hole edge was even was 9% of the density. As a result, the melting percentage was 23%.

(Example 21)

Ultrasonic vibration was applied to a base material for joining and adherends under the same conditions as in Example 18 except that the side length of the regular hexagon was set to 1 mm and the center-to-center distance of the holes was set to 5.73 mm. At this time, the area ratio R was 91%, the characteristic length L was 5.48 mm, L/t = 21.9, and the absolute value of the thickness difference for confirming whether the thickness of the non-hole portion was even was 8% of the thickness. The absolute value of the difference in density for confirming whether the density of the non-hole edge was even was 9% of the density. As a result, the melting percentage was 6%.

(Comparative Example 6)

Ultrasonic vibration was applied to a base material for joining and adherends under the same conditions as in Example 18 except that a solid film was used without making holes in the PEEK film. As a result, the melting percentage was 3%.
The conditions and results of Examples 18 to 21 and Comparative Example 6 are listed in Table 6.

(Example 22)

Ultrasonic vibration was applied to a base material for joining and adherends under the same conditions as in Example 7 except that a PA6 film having a thickness of 0.08 mm was used instead of the PEEK film having a thickness of 0.1 mm, the side length of the regular hexagon was set to 0.5 mm, the center-to-center distance of the holes was set to 1.22 mm, and the time of application of the ultrasonic waves was set to 90 msec. At this time, the area ratio R was 49%, the characteristic length L was 0.40 mm, L/t = 5.0, and the absolute value of the thickness difference for confirming whether the thickness of the non-hole portion was even was 8% of the thickness. The absolute value of the difference in density for confirming whether the density of the non-hole edge was even was 9% of the density. As a result, the melting percentage was 93%.

(Example 23)

Ultrasonic vibration was applied to a base material for joining and adherends under the same conditions as in Example 22 except that the side length of the regular hexagon was set to 1 mm and the center-to-center distance of the holes was set to 2.73 mm. At this time, the area ratio R was 60%, the characteristic length L was 1.19 mm, L/t = 14.9, and the absolute value of the thickness difference for confirming whether the thickness of the non-hole portion was even was 8% of the thickness. The absolute value of the difference in density for confirming whether the density of the non-hole edge was even was 9% of the density. As a result, the melting percentage was 74%.

(Example 24)

Ultrasonic vibration was applied to a base material for joining and adherends under the same conditions as in Example 22 except that the center-to-center distance of the holes was set to 2.87 mm. At this time, the area ratio R was 91%, the characteristic length L was 2.74 mm, L/t = 34.2, and the absolute value of the thickness difference for confirming whether the thickness of the non-hole portion was even was 8% of the thickness. The absolute value of the difference in density for confirming whether the density of the non-hole edge was even was 9% of the density. As a result, the melting percentage was 36%.

(Example 25)

Ultrasonic vibration was applied to a base material for joining and adherends under the same conditions as in Example 22 except that the side length of the regular hexagon was set to 2 mm and the center-to-center distance of the holes was set to 11.46 mm. At this time, the area ratio R was 91%, the characteristic length L was 10.95 mm, L/t = 136.9, and the absolute value of the thickness difference for confirming whether the thickness of the non-hole portion was even was 8% of the thickness. The absolute value of the difference in density for confirming whether the density of the non-hole edge was even was 9% of the density. As a result, the melting percentage was 20%.

(Comparative Example 7)

Ultrasonic vibration was applied to a base material for joining and adherends under the same conditions as in Example 22 except that a solid film was used without making holes in the PA6 film. As a result, the melting percentage was 10%.

The conditions and results of Examples 22 to 25 and Comparative Example 7 are listed in Table 7.

(Example 26)

A test piece in which adherends were welded to each other was obtained in the same manner as in Example 5 except that the base material for joining used in Example 7 was used. Three pieces with a width of 15 mm were cut out from the test piece and subjected to a tensile test at a tensile speed of 5 mm/min to evaluate the weld strength of the welded portion (lap shear test). As a result, the weld strength was 25 MPa.

(Example 27)

A test piece in which adherends were welded to each other was obtained in the same manner as in Example 26 except that the side length of the regular hexagon was set to 2 mm and the center-to-center distance of the holes was set to 3.96 mm. The absolute value of the difference in thickness for confirming whether the thickness of the non-hole portion was even was 8% of the thickness. The absolute value of the difference in density for confirming whether the density of the non-hole edge was even was 9% of the density. Three pieces with a width of 15 mm were cut out from the test piece and subjected to a tensile test at a tensile speed of 5 mm/min to evaluate the weld strength of the welded portion (lap shear test). As a result, the weld strength was 16 MPa.

(Example 28)

A test piece in which adherends were welded to each other was obtained in the same manner as in Example 26 except that the side length of the regular hexagon was set to 1.38 mm and the center-to-center distance of the holes was set to 3.38 mm. The absolute value of the difference in thickness for confirming whether the thickness of the non-hole portion was even was 8% of the thickness. The absolute value of the difference in density for confirming whether the density of the non-hole edge was even was 9% of the density. Three pieces with a width of 15 mm were cut out from the test piece and subjected to a tensile test at a tensile speed of 5 mm/min to evaluate the weld strength of the welded portion (lap shear test). As a result, the weld strength was 19 MPa.

The conditions and results of Examples 26 to 28 are listed in Table 8. As compared with Examples 27 and 28, Example 26 was in a preferable situation where the area ratio R was 49%, which was close to 50%, and L/t = 4, which was small, so that the uneven distribution of the heated spots was small and the heating rate was increased, and thus the welding was stable and the weld strength was better.

(Example 29)

A test piece in which adherends were welded to each other was obtained in the same manner as in Example 26 except that 2 thermosetting epoxy resin plates (thickness: 2 mm, welded surface degreased) containing carbon fibers as reinforcing fibers were used as the adherends, and a PA6 film having a thickness of 0.08 mm was used for the base material for joining in place of the PEEK film having a thickness of 0.1 mm. The absolute value of the difference in thickness for confirming whether the thickness of the non-hole portion was even was 8% of the thickness. The absolute value of the difference in density for confirming whether the density of the non-hole edge was even was 9% of the density. Three pieces with a width of 15 mm were cut out from the test piece and subjected to a tensile test at a tensile speed of 5 mm/min to evaluate the weld strength of the welded portion (lap shear test). As a result, the weld strength was 17 MPa.

(Example 30)

A test piece in which adherends were welded to each other was obtained in the same manner as in Example 26 except that 2 A6061 aluminum alloy plates (thickness: 2 mm, welded surface degreased) were used as the adherends, and a PA6 film having a thickness of 0.08 mm was used for the base material for joining in place of the PEEK film having a thickness of 0.1 mm. The absolute value of the difference in thickness for confirming whether the thickness of the non-hole portion was even was 8% of the thickness. The absolute value of the difference in density for confirming whether the density of the non-hole edge was even was 9% of the density. Three pieces with a width of 15 mm were cut out from the test piece and subjected to a tensile test at a tensile speed of 5 mm/min to evaluate the weld strength of the welded portion (lap shear test). As a result, the weld strength was 20 MPa.

The conditions and results of Examples 29 and 30 are listed in Table 8. From Examples 29 and 30, even when the adherends were a thermosetting resin other than the thermoplastic resin, or a metal, good welding can be obtained.

[Table 1]

|  | Example 1 | Comparative Example 1 | Comparative Example 2 |
|---|---|---|---|
| Thickness t (mm) | 0.1 | 0.1 | - |
| Ratio R (%) | 60 | No holes | Plain weave mesh Thread diameter: 0.3 mm Mesh size: 0.74 mm |
| Characteristic length L/t | 25.3 |  |  |
| Material | PEEK | PEEK | PEEK |
| Success or failure of welding | ○ | × | × |

[Table 2]

|  | Example 2 | Example 3 | Example 4 | Comparative Example 3 |
|---|---|---|---|---|
| Thickness t (mm) | 0.1 | 0.1 | 0.1 | 0.1 |
| Ratio R (%) | 60 | 77 | 42 | No holes |
| Characteristic length L/t | 25.3 | 23.2 | 29.6 |  |
| Material | PEEK | PEEK | PEEK | PEEK |
| Success or failure of welding | ○ | ○ | ○ | × |

[Table 3]

|  | Example 5 | Example 6 | Comparative Example 4 |
|---|---|---|---|
| Thickness t (mm) | 0.1 | 0.1 | 0.1 |

(continued)

|  | Example 5 | Example 6 | Comparative Example 4 |
|---|---|---|---|
| Ratio R (%) | 60 | 49 | |
| Characteristic length L/t | 25.3 | 4 | No holes |
| Shape of holes | Round | Hexagon | |
| Material | PEEK | PEEK | PEEK |
| Success or failure of welding | ○ | ○ | × |

[Table 4]

|  | Example 7 | Example 8 | Example 9 | Example 10 | Example 11 | Example 12 | Example 13 |
|---|---|---|---|---|---|---|---|
| Thickness t (mm) | 0.1 | 0.1 | 0.1 | 0.1 | 0.1 | 0.1 | 0.1 |
| Ratio R (%) | 49 | 24 | 51 | 78 | 50 | 24 | 91 |
| Characteristic length L/t | 4 | 5.3 | 5.8 | 12.8 | 11.5 | 10.7 | 27.4 |
| Material | PEEK | PEEK | PEEK | PEEK | PEEK | PEEK | PEEK |
| Molten area ratio (%) | 97 | 66 | 87 | 53 | 72 | 55 | 36 |
| Melting location | Whole area | Whole area | Whole area | Whole area | Whole area | Whole area | Whole area |

[Table 5]

|  | Example 14 | Example 15 | Example 16 | Example 17 | Comparative Example 5 |
|---|---|---|---|---|---|
| Thickness t (mm) | 0.1 | 0.1 | 0.1 | 0.1 | 0.1 |
| Ratio R (%) | 50 | 97 | 78 | 91 | |
| Characteristic length L/t | 23.1 | 57.4 | 51.3 | 109.5 | No holes |
| Material | PEEK | PEEK | PEEK | PEEK | PEEK |
| Molten area ratio (%) | 48 | 27 | 44 | 26 | 20 |
| Melting location | Whole area | Whole area | Whole area | Whole area | Edge |

[Table 6]

|  | Example 18 | Example 19 | Example 20 | Example 21 | Comparative Example 6 |
|---|---|---|---|---|---|
| Thickness t (mm) | 0.25 | 0.25 | 0.25 | 0.25 | 0.25 |
| Ratio R (%) | 50 | 40 | 78 | 91 | |
| Characteristic length L/t | 4.6 | 4.5 | 20.5 | 21.9 | No holes |
| Material | PEEK | PEEK | PEEK | PEEK | PEEK |
| Molten area ratio (%) | 30 | 29 | 23 | 6 | 3 |
| Melting location | Whole area | Whole area | Whole area | Whole area | Edge |

[Table 7]

|  | Example 22 | Example 23 | Example 24 | Example 25 | Comparative Example 7 |
|---|---|---|---|---|---|
| Thickness t (mm) | 0.08 | 0.08 | 0.08 | 0.08 | 0.08 |

(continued)

|  | Example 22 | Example 23 | Example 24 | Example 25 | Comparative Example 7 |
|---|---|---|---|---|---|
| Ratio R (%) | 49 | 60 | 91 | 91 | No holes |
| Characteristic length L/t | 5 | 14.9 | 34.2 | 136.9 | |
| Material | PA6 | PA6 | PA6 | PA6 | PA6 |
| Molten area ratio (%) | 93 | 74 | 36 | 20 | 10 |
| Melting location | Whole area | Whole area | Whole area | Whole area | Edge |

[Table 8]

|  | Example 26 | Example 27 | Example 28 | Example 29 | Example 30 |
|---|---|---|---|---|---|
| Thickness t (mm) | 0.1 | 0.1 | 0.1 | 0.08 | 0.08 |
| Ratio R (%) | 49 | 24 | 50 | 49 | 49 |
| Characteristic length L/t | 4 | 5.3 | 11.6 | 4 | 4 |
| Material | PEEK | PEEK | PEEK | PA6 | PA6 |
| Adherend | CF/PEEK | CF/PEEK | CF/PEEK | CF/epoxy | A6061 |
| Weld strength (MPa) | 25 | 16 | 19 | 17 | 20 |

DESCRIPTION OF REFERENCE SIGNS

1: Base material for joining of present invention
2: Adherend
3: Hole portion of base material for joining
4: Non-hole portion of base material for joining
5: Non-hole edge of base material for joining
6: Thin line obtained by performing thinning process on non-hole portion
7: Distance to non-hole edge on both sides of thin line defined by points on thin line

**Claims**

1. A film-like base material for joining, comprising a thermoplastic resin and having a plurality of hole portions formed in a plane of the base material for joining, wherein a non-hole portion has an even thickness, and in a projection surface perpendicular to a thickness direction of the base material for joining, non-hole edges lie at an even density.

2. The base material for joining according to claim 1, wherein an area ratio R of the non-hole portion to a total projected area of the projection surface perpendicular to the thickness direction of the base material for joining satisfies 20% < R < 80%.

3. The base material for joining according to claim 1, wherein a characteristic length L (mm) determined by subjecting the non-hole portion to a thinning process in the projection surface perpendicular to the thickness direction of the base material for joining, measuring a distance to a non-hole edge closest to a thin line on each of both sides of the thin line, calculating a sum of the distance, and averaging the sum of the distance over an entire thin line satisfies 2 < L/t < 50 with respect to a thickness t (mm) of the non-hole portion.

4. The base material for joining according to claim 1, wherein the thermoplastic resin is at least one selected from a polyamide resin, a polyphenylene sulfide resin, and a polyaryletherketone resin.

Figure 1

Figure 2

Figure 3

( a )

( b )

EP 4 659 938 A1

Figure 4

irradiation direction

projection surface

Figure 5

（a）

1
3
4
5

（b）

1
3
4
5

EP 4 659 938 A1

Figure 6

(a)

(b)

(c)

Figure 7

## INTERNATIONAL SEARCH REPORT

| International application No. |
|---|
| **PCT/JP2024/002353** |

| A. | CLASSIFICATION OF SUBJECT MATTER |
|---|---|

*B29C 65/08*(2006.01)i; *B26F 1/32*(2006.01)i
FI:  B29C65/08; B26F1/32 J

According to International Patent Classification (IPC) or to both national classification and IPC

| B. | FIELDS SEARCHED |
|---|---|

Minimum documentation searched (classification system followed by classification symbols)

B29C65/00-65/82; B26F1/32

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2007-331198 A (TAIYO KOGYO CO., LTD.) 27 December 2007 (2007-12-27) | 1-2 |
| A | claims, paragraphs [0015]-[0031], fig. 3 | 3-4 |
| X | JP 59-53573 A (NITTO DENKI KOGYO KK) 28 March 1984 (1984-03-28) | 1-2, 4 |
| A | claims, page 2, upper left column, line 19 to page 4, upper left column, line 17, fig. 1 | 3 |
| X | JP 5-38788 A (SUDO, Norito) 19 February 1993 (1993-02-19) | 1-2, 4 |
| A | claims, paragraphs [0008]-[0074], fig. 9 | 3 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 March 2024** | **02 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

| International application No. |
| --- |
| **PCT/JP2024/002353** |

| Patent document<br>cited in search report | Publication date<br>(day/month/year) | Patent family member(s) | Publication date<br>(day/month/year) |
| --- | --- | --- | --- |
| JP 2007-331198 A | 27 December 2007 | (Family: none) | |
| JP 59-53573 A | 28 March 1984 | (Family: none) | |
| JP 5-38788 A | 19 February 1993 | (Family: none) | |

Form PCT/ISA/210 (patent family annex) (July 2022)

**REFERENCES CITED IN THE DESCRIPTION**

**Patent documents cited in the description**

- JP 5973690 B
- JP 3536385 B
- JP 6517713 B
- JP 6820374 B